**Europäisches Patentamt**

**European Patent Office**

**Office européen des brevets**

(19)

(11) Numéro de publication : **0 478 455 A1**

# DEMANDE DE BREVET EUROPEEN

(12)

(21) Numéro de dépôt : **91402566.3**

(22) Date de dépôt : **26.09.91**

(51) Int. Cl.⁵ : **H01R 35/02**

(30) Priorité : **27.09.90 FR 9011927**

(43) Date de publication de la demande :
**01.04.92 Bulletin 92/14**

(84) Etats contractants désignés :
**DE ES GB IT SE**

(71) Demandeur : **JAEGER**
**2, rue Baudin**
**F-92303 Levallois-Perret (FR)**

(72) Inventeur : **Gauthier, Christian**
**50bis avenue Charles de Gaulle**
**F-92200 Neuilly/Seine (FR)**

(74) Mandataire : **Schrimpf, Robert et al**
**Cabinet Regimbeau 26, Avenue Kléber**
**F-75116 Paris (FR)**

(54) **Dispositif de transmission de signaux entre deux pièces susceptibles de déplacement relatif à rotation.**

(57)   La présente invention concerne un dispositif de transmission de signaux entre deux pièces susceptibles de déplacement relatif à rotation, du type comprenant deux cages (100, 200) respectivement externe et interne susceptibles de rotation relative, et des moyens souples (400) conducteurs de signal, placés entre les deux cages (100, 200), caractérisé par le fait que : la cage externe (100) comprend une couronne dentée (110), la cage interne (200) comprend une roue dentée (210), il est prévu au moins un galet satellite (300) intercalé entre la cage externe (100) et la cage interne (200) et comprenant un pignon denté (310) en prise avec la couronne dentée (110) et la roue dentée (210), il est prévu au moins un galet satellite (300) intercalé entre la cage externe (100) et la cage interne (200) et comprenant un palier cylindrique (320), et lesdits moyens conducteurs (400) forment une boucle en U (422) engagée sur un palier (320) porté par un galet satellite (300).

EP 0 478 455 A1

FIG_1

La présente invention concerne le domaine des dispositifs de transmission de signaux entre deux pièces susceptibles de déplacement relatif à rotation.

La présente invention trouve en particulier, mais non exclusivement, application à la transmission de signaux, tels que des signaux électriques, entre un ou des premiers organes liés à un volant de véhicule automobile et un ou des seconds organes liés à la colonne de direction ou le châssis du véhicule.

Les premiers organes liés au volant peuvent être formés par exemple de commutateurs électriques, transducteurs analogiques tels que potentiomètres, ou encore des systèmes à poches gonflables généralement dénommés "air bag" pour la protection du conducteur, en cas d'accident.

Les dispositifs de transmission de signaux électriques entre deux pièces susceptibles de déplacement relatif à rotation, jusqu'ici proposés, sont généralement formés de systèmes comprenant un empilement de disques au moins partiellement conducteurs et de curseurs associés. Ces dispositifs ont déjà rendu de grands services. Toutefois, les dispositifs connus du type précité ne donnent pas totalement satisfaction. Ils présentent souvent des micro-coupures lors de la rotation des disques. Pour cette raison, les dispositifs de transmission de signaux électriques du type précité ne sont pas acceptables dans un grand nombre d'applications, par exemple lorsqu'il s'agit de transmettre des signaux multiplexés, ou encore pour la commande des dispositifs de sécurité précités de type "air bag". Dans ce dernier cas en effet, les dispositifs de transmission connus provoquent des déclenchements intempestifs du dispositif de sécurité.

Certains constructeurs ont tenté d'utiliser un système comprenant deux cages respectivement externe et interne susceptibles de rotation relative et des conducteurs souples placés entre les deux cages. Ce second type de dispositif décrit par exemple dans les documents GB-A-2216476 et US-A-4540223 ne donne pas non plus totalement satisfaction et n'a pour l'instant donné lieu qu'à une exploitation à échelle très limitée.

Le but de la présente invention est de proposer un nouveau dispositif apte à éliminer les inconvénients de la technique antérieure.

Ce but est atteint, selon la présente invention, grâce à un système comprenant deux cages respectivement externe et interne susceptibles de rotation relative et des moyens souples conducteurs de signal placés entre les deux cages, caractérisé par le fait que :
- la cage externe comporte une couronne dentée,
- la cage interne comporte une roue dentée,
- il est prévu au moins un galet satellite intercalé entre la cage externe et la cage interne et comprenant un pignon denté venant en prise avec la couronne dentée de la cage externe et la roue dentée de la cage interne,
- il est prévu au moins un galet satellite intercalé entre la cage externe et la cage interne et comprenant un palier cylindrique, et
- lesdits moyens conducteurs forment une boucle en U engagée sur le palier porté par un galet satellite.

Il est par ailleurs important que lors de l'installation du dispositif de transmission, la position relative occupée par les cages interne et externe soit connue avec précision.

Les dispositifs de transmission à cages interne et externe et moyens conducteurs souples jusqu'ici proposés ne permettent pas de connaître aisément cette position.

La présente invention permet d'éliminer cet inconvénient en proposant, selon un mode de réalisation avantageux, un système du type précité comprenant deux cages respectivement externe et interne susceptibles de rotation relative et des moyens souples conducteurs de signal placés entre les deux cages, caractérisé par le fait que le dispositif comprend initialement des liaisons sécables aptes à interdire provisoirement toute rotation relative entre les cages interne et externe.

Selon une autre caractéristique avantageuse de la présente invention, le système du type précité comprenant deux cages respectivement externe et interne susceptibles de rotation relative et des moyens souples conducteurs de signal placés entre les deux cages, est caractérisé par le fait que le dispositif comprend un système d'indexage formé d'une part d'un guide en spirale ménagé sur une première pièce et d'autre part d'un doigt d'indexage engagé sur le guide en spirale et placé dans une fenêtre ménagée dans une seconde pièce susceptible de rotation par rapport à la première pièce, de sorte que le doigt d'indexage soit déplacé radialement par rapport à l'axe de rotation des pièces lorsque celles-ci sont entraînées à rotation relative.

Selon une première variante de la présente invention, la première et la seconde pièces sont formées par les deux cages.

Selon une seconde variante de la présente invention, la première et la seconde pièces sont formées par une cage et par une bague intermédiaire placée entre la cage interne et la cage externe.

Le fonctionnement du dispositif conforme à la présente invention sera exposé par la suite.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 représente une vue schématique en perspective d'un dispositif conforme à la présente invention,

– les figures 2 et 3 représentent des vues schématiques en perspective de deux modalités
d'enroulement des moyens conducteurs,

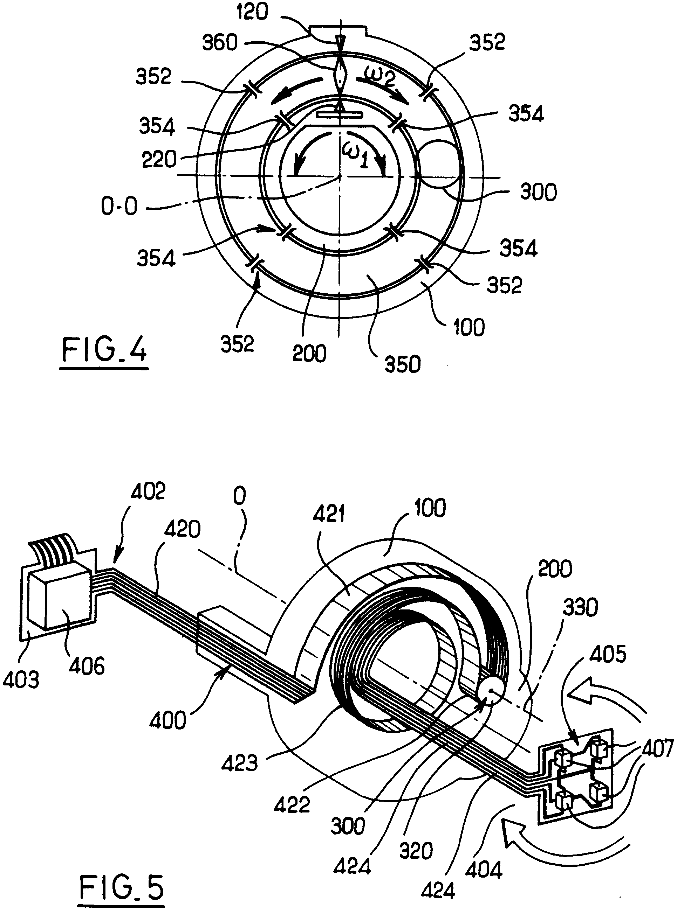

– la figure 4 représente une vue en plan axial d'un
dispositif conforme à la présente invention, la
figure 4 illustrant plus précisément un mode de
réalisation de moyens d'indexage conforme à la
présente invention,

– la figure 5 représente une vue partielle en perspective d'un dispositif conforme à la présente
invention et illustre plus précisément un mode de
réalisation des moyens conducteurs,

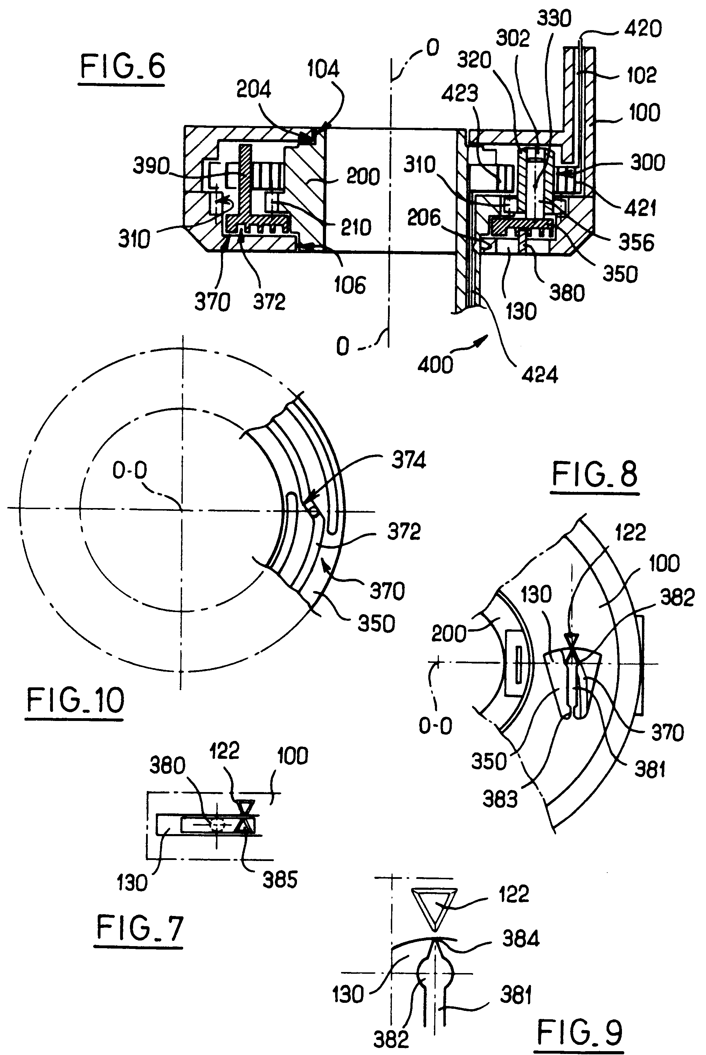

– la figure 6 représente une vue schématique en
coupe axiale d'un dispositif conforme à une autre
variante de réalisation de la présente invention,

– les figures 7, 8 et 9 représentent des vues en
plan axial de trois variantes de réalisation de
moyens d'indexage conformes à la présente
invention,

– la figure 10 représente une vue en plan d'une
bague intermédiaire portant le galet satellite et
pourvue d'une gorge d'indexage en spirale,

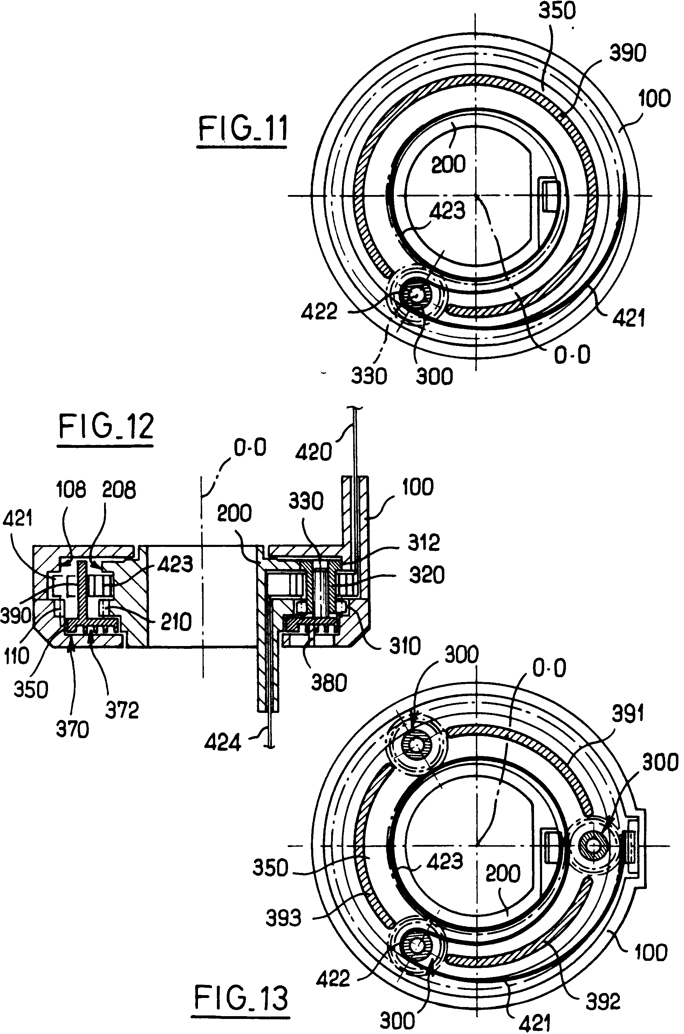

– la figure 11 représente une vue schématique en
plan du dispositif conforme à la variante de réalisation illustrée sur la figure 6,

– la figure 12 représente une vue schématique en
coupe axiale similaire au plan de coupe de la
figure 6 d'un dispositif conforme à une autre
variante de réalisation de la présente invention, et

– la figure 13 représente une vue schématique en
plan axial du dispositif illustré sur la figure 12.

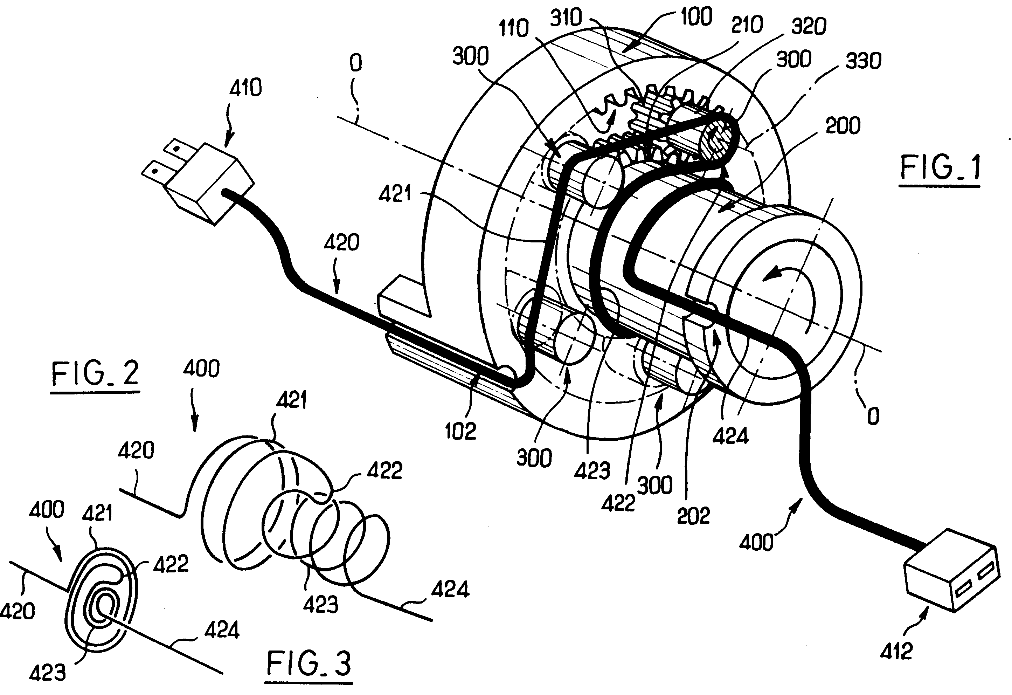

On distingue sur la figure 1 annexée, un dispositif
comprenant une cage externe 100, une cage interne
200, au moins un galet satellite 300 et des moyens
conducteurs 400.

La cage interne 200 et la cage externe 100 sont
coaxiales, centrées sur un axe O-O. De plus, la cage
externe 100 et la cage interne 200 sont concentriques
au moins sur une partie de leur longueur.

La cage externe 100 et la cage interne 200 peuvent faire l'objet de nombreuses variantes et être réalisées à base de nombreux matériaux.

Toutefois, de préférence la cage externe 100 et
la cage interne 200 sont réalisées par moulage à base
de matière plastique. Comme représenté sur la figure
1, la cage externe 100 est pourvue d'une couronne
dentée 110 centrée sur l'axe O-O.

En regard la cage interne 200 est munie d'une
roue dentée 210. La roue dentée 210 présente un diamètre plus faible que la couronne dentée 110 et est
placée à l'intérieur de celle-ci.

Le galet satellite 300 est intercalé entre la cage
externe 100 et la cage interne 200.

Selon le mode de réalisation particulier représenté sur la figure 1, le galet satellite 300 comprend
un pignon denté 310 et un palier 320 cylindrique de
révolution qui sont coaxiaux, centrés sur un axe 330.
L'axe 330 est parallèle à l'axe O-O.

Le pignon denté 310 engrène avec la couronne
dentée 110 et la roue dentée 210. Le palier cylindrique 320 sert de support aux moyens conducteurs
400.

Plus précisément, selon le mode de réalisation
représenté sur la figure 1, il est prévu plusieurs galets
satellites 300 répondant à la définition précitée
comprenant un pignon denté 310 et un palier cylindrique 320. Ces différents galets satellites 300 sont
équirépartis autour de l'axe O-O entre la cage externe
100 et la cage interne 200. Les moyens conducteurs
400 sont de préférence formés d'un câble souple
comprenant différents éléments électriquement
conducteurs isolés entre eux.

D'autres variantes de réalisation des moyens
conducteurs 400 seront décrites par la suite.

Comme représenté sur la figure 1 les moyens
conducteurs 400 peuvent être pourvus de connecteurs 410, 412, à chacune de leurs extrémités.

Plus précisément, selon le mode de réalisation
représenté sur la figure 1, le cheminement des
moyens conducteurs 400 dans le dispositif de transmission est le suivant.

Une première extrémité 420 des moyens conducteurs s'étend sensiblement parallèlement à l'axe O-O
et est engagée dans une gorge externe longitudinale
102 prévue sur la surface extérieure de la cage
externe 100.

Cette première extrémité 420 des moyens
conducteurs 400 se prolonge par un brin 421 qui
s'étend perpendiculairement à l'axe O-O, en
s'appuyant sur les paliers cylindriques 320 de différents galets satellites 300. Le brin 421 s'étend dans
le sens des aiguilles d'une montre à partir de la première extrémité 420 selon l'illustration donnée sur la
figure 1. Le brin 421 précité se prolonge par une boucle 422 en U qui s'enroule sur l'un des paliers cylindriques 320. Cette boucle en U se prolonge par un
brin 423 qui s'enroule sur la cage interne 200 dans le
sens inverse du brin 421, soit dans le sens contraire
des aiguilles d'une montre selon l'illustration donnée
sur la figure 1. On notera que le brin 423 peut
comprendre plusieurs tours sur la cage interne 200.
Plus précisément, le nombre de tours effectué par le
brin 423 sur la cage interne 200 lorsque le galet principal 300 sur lequel est placé la boucle 422 est adjacent à la gorge 102, doit être au moins égal au nombre
de tours requis dans le déplacement relatif entre la
cage externe 100 et la cage interne 200.

Le brin 423 enroulé sur la cage interne 200 se
prolonge ensuite sous forme de la seconde extrémité
424 du câble 400, soit parallèlement à l'axe O-O.
Cette seconde extrémité 424 est de préférence engagée dans une gorge 202 prévue sur la périphérie extérieure de la cage interne 200.

Comme représenté sur la figure 2 les moyens
conducteurs 400 peuvent être enroulés en hélice sur
la cage externe 100 et sur la cage interne 200. En variante comme représenté sur la figure 3, les moyens conducteurs 400 peuvent être enroulés en spiral sur la cage interne 100 et sur la cage externe 200, c'est-à-dire que dans ce dernier cas, le pas axial des spires est pratiquement nul.

De préférence, selon la présente invention, la cage externe 100 est fixe tandis que la cage interne 200 est mobile. La disposition inverse peut bien entendu être retenue.

Les galets satellites 300 peuvent être montés à rotation autour de leur axe 330 sur une bague intermédiaire 350 intercalée entre la cage externe 100 et la cage interne 200. La bague intermédiaire 350 doit être libre de rotation par rapport à la cage externe 100 et la cage interne 200. Une telle bague intermédiaire 350 est notamment visible sur la figure 4.

Il est important que lors de l'installation du dispositif de transmission, par exemple sur une colonne de direction de véhicule automobile, la position relative occupée par la cage interne 200 par rapport à la cage externe 100 coïncide exactement avec la position du volant par rapport à la colonne de direction. Généralement le montage est ainsi effectué en position neutre central à mi-course entre les positions extrêmes de rotation.

On peut bien entendu prévoir de livrer le dispositif possédant une cage externe 100, une cage interne 200 et le cas échéant une bague intermédiaire 350 susceptible de libre rotation relative.

Toutefois, il est nettement préférable de prévoir des moyens permettant d'imposer la position neutre au dispositif de transmission. De tels moyens peuvent être formés par exemple de ponts de liaison pouvant être rompus aisément entre les différents éléments susceptibles de rotation relative du système.

On peut ainsi prévoir des ponts de liaison 352 entre la bague intermédiaire 350 et la cage externe 100 et des ponts de liaison 354 entre la bague intermédiaire 350 et la cage interne 300. Ces ponts de liaison 352, 354 peuvent être venus de moulage avec la bague intermédiaire 350, la cage externe 100 et la cage interne 200.

Dans le cas où le dispositif ne comprend pas de bague intermédiaire 350, les ponts de liaison précités doivent bien entendu être prévus directement entre la cage externe 100 et la cage interne 200.

Il est en outre important de pouvoir retrouver la position neutre préférentielle d'assemblage dans l'hypothèse où le système de transmission a été démonté provisoirement.

Pour cela la présente invention propose, selon un mode de réalisation préférentiel, de placer des index 120, 220 et 360, comme illustré schématiquement sur la figure 4, respectivement sur la cage externe 100, la cage interne 200 et la bague intermédiaire 350. Ces index 120, 220 et 360 sont alignés en position neutre de livraison du système.

Un calcul simple montre que les index 120, 220 et 360 ne sont alignés qu'une fois, compte-tenu de la vitesse de rotation différentielle de la bague intermédiaire 350, sur un nombre de rotations relatives entre la cage externe 100 et la cage interne 200 égal à D1/(D1+D3), relation dans laquelle D1 représente le nombre de dents de la roue dentée 210, tandis que D3 représente le nombre de dents de la couronne dentée 110.

Ainsi, à titre d'exemple non limitatif, si la couronne dentée 110 comprend 72 dents tandis que la roue dentée 210 comprend 48 dents, les repères 120, 220 et 360 ne seront alignés qu'une fois pour cinq rotations relatives entre la cage externe 100 et la cage interne 200, soit une possibilité de rotation de plus ou moins 2,5 tours par rapport à une position neutre coïncidant avec l'alignement des index 120, 220 et 360.

Ainsi pour autoriser 5 tours de rotation du volant avec une garantie d'indexage, le nombre de dents de la couronne dentée 110 doit être au moins égal à 3/2 fois le nombre de dents de la roue dentée 210.

Le fonctionnement général du système sera aisément compris par l'homme de l'art : lorsque la cage interne 200 est entraînée à rotation par rapport à la cage externe 100, la longueur du brin externe 421 des moyens conducteurs 400 varie dans le sens inverse (accroissement ou réduction) de la longueur du brin 423 prévu sur la cage interne 200 (réduction ou accroissement selon le sens de rotation relative), mais selon la même amplitude absolue. Le palier cylindrique 320 entraîné à rotation par le pignon denté 310 permet ainsi de dérouler ou d'enrouler sans frottement les moyens conducteurs 400 en maintenant ceux-ci constamment à l'état semi-tendu pour éviter toute déformation néfaste de ces moyens conducteurs.

Comme indiqué précédemment les moyens conducteurs 400 peuvent faire l'objet de nombreux modes de réalisation.

Il peut s'agir d'un câble de section ronde ou plane comprenant différents fils conducteurs souples parallèles et isolés entre eux.

Les moyens conducteurs 400 peuvent être formés d'un circuit imprimé souple. De tels circuits imprimés souples comprenant plusieurs pistes électriquement conductrices parallèles sont bien connus de l'homme de l'art.

Un tel mode de réalisation de moyens conducteurs sous forme de circuits imprimés souples est représenté schématiquement sur la figure 5 annexée.

Il est d'ailleurs possible de superposer plusieurs couches de tels circuits imprimés souples.

Les moyens conducteurs 400 peuvent encore être formés d'un câble à base de silicone pourvu de charges électriquement conductrices.

On peut encore envisager de réaliser les moyens conducteurs 400 sous forme de fibres optiques.

Dans le cas où les moyens conducteurs 400 sont formés d'un circuit imprimé souple comme illustré schématiquement sur la figure 5, on notera la possibilité de prévoir, au moins à l'une des extrémités 402, 404, de ce circuit, des plages de support électriquement isolant 403, 405 aptes à recevoir des composants, notamment des composants électroniques 406, 407.

On a décrit précédemment en regard de la figure 4 des moyens d'indexage de la cage interne 200 par rapport à la cage externe 100 formés d'index 120, 220 et 360 prévus respectivement sur la cage externe 100, sur la cage interne 200 et sur la bague intermédiaire 350.

Toutefois les moyens d'indexage ne sont pas limités à ce mode de réalisation particulier.

Ainsi par exemple, comme représenté sur la figure 6 annexée, on peut prévoir des moyens d'indexage comprenant une gorge en spirale 372 sur la face 370 de la bague intermédiaire 350 et un doigt 380 engagé dans la gorge 370. La face 370 précitée de la bague intermédiaire 350 s'étend perpendiculairement à l'axe O-O. Il s'agit de la face opposée aux galets satellites 300.

Le doigt 380 engagé dans la gorge 372 est placé dans une fenêtre 130 prévue dans l'une des cages 100, 200. Il s'agit de préférence de la cage fixe. Selon le mode de réalisation représenté sur les figures 6 et 8, la fenêtre 130 est ménagée dans la cage externe 100.

En variante la fenêtre 130 pourra néanmoins être ménagée dans la cage interne 200. Par ailleurs, le fenêtre 130 pourrait être ménagée non point dans la cage fixe, mais dans la cage mobile.

La fenêtre 130 s'étend sensiblement radialement par rapport à l'axe O-O.

Le doigt 380 placé dans la fenêtre 130 peut être indépendant de la cage pourvue de la fenêtre 130. Un tel mode de réalisation est représenté sur la figure 7.

Dans ce cas, le doigt 280 étant indépendant de la bague intermédiaire 350 et des cages 100, 200, la fenêtre 130 doit être conçue pour guider étroitement à translation le doigt 380 formant curseur, par rapport à la bague munie de la fenêtre 130, dans une direction radiale par rapport à l'axe O-O. En effet, le doigt 380 engagé dans la gorge 372 étant immobilisé à rotation par rapport à la cage munie de la fenêtre 130, est sollicité en déplacement radial par rapport à l'axe O-O lors de déplacement relatif à rotation entre les cages 100, 200 et par conséquent la cage pourvue de la fenêtre 130 et la bague intermédiaire 350 portant les galets satellites 300.

Selon une variante illustrée sur la figure 8, le doigt 380 peut être prévu sur une languette souple 381 venue de moulage avec la cage pourvue de la fenêtre 130. Il s'agit de la cage externe 100 selon le mode de réalisation représenté sur la figure 8.

Dans ce cas le doigt 380 est prévu au niveau de l'extrémité libre 382 de la languette 381.

L'extrémité opposée 383 de la languette 381, qui correspond à la zone de raccordement de la languette 381 sur la bague pourvue de la fenêtre 130 doit présenter une section réduite afin de présenter une souplesse suffisante pour autoriser un déplacement radial, par rapport à l'axe O-O, du doigt 380 lors de la rotation relative entre les diverses cages.

Plus précisément encore, selon le mode de réalisation particulier représenté sur la figure 8 annexée, la fenêtre 130 présente une section généralement triangulaire, l'extrémité 383 de raccordement de la languette 381 est située au niveau d'un sommet de la fenêtre 130.

Selon une autre caractéristique avantageuse de la présente invention représentée sur la figure 9, l'extrémité 382 de la languette 381 portant le doigt 380 engagé dans la gorge 372 est initialement reliée à la cage pourvue de la fenêtre 130 par une zone de très faible section, et donc aisément sécable. Une telle disposition permet d'imposer une position relative connue entre la bague intermédiaire 350 et la cage 100 pouvue de la fenêtre 130, à la livraison. Cependant, la zone de liaison sécable 384 précitée peut aisément être rompue après installation du système pour autoriser une rotation relative entre la cage externe 100, la cage interne 200 et la bague intermédiaire 350.

Pour pouvoir retrouver aisément, suite à un démontage éventuel du système la position d'installation préférentielle connue, il est prévu de préférence, selon les trois modes de réalisation précités décrits en regard des figures 7, 8 et 9, un index 122 sur la cage 100 munie de la fenêtre 130, et un index 385, sur le curseur portant le doigt 380 ou la languette 381 portant le doigt 380 selon le mode de réalisation retenu.

Selon une autre caractéristique avantageuse de l'invention représentée notamment sur la figure 10 annexée, la rampe ou gorge hélicoïdale 372 présente une inclinaison accentuée dans sa zone centrale 374 correspondant à la position médiane d'enroulement des moyens conducteurs 400. Grâce à cette caractéristique on génère un effort plus important sur le point sécable 384 lorsqu'un couple est appliqué sur les cages 100, 200, pour entraîner celles-ci à rotation. La rupture de l'élément sécable 384 est ainsi obtenue plus aisément.

Par ailleurs, la réalisation d'une zone centrale 374 de forte inclinaison, permet de faciliter l'indexage en position médiane du système après démontage de celui-ci.

Le mode de réalisation représenté schématiquement sur la figure 1 comprend différents galets satellites 300 équirépartis autour de l'axe O-O, les moyens conducteurs 400 étant susceptibles de s'appuyer sur les différents paliers cylindriques 320 composés par ces galets 300. Entre deux paliers cylindriques adjacents 320, le brin 421 des moyens conducteurs 400 forme ainsi différents segments correspondant à des cordes de la couronne dentée 310.

En variante, comme représenté sur la figure 11 annexée, qui correspond à la vue en coupe de la figure 6, on peut prévoir un seul galet satellite 300 pourvu d'un pignon moteur 310 et d'un palier cylindrique 320. Dans ce cas, il est cependant très préférable de prévoir sur la bague intermédiaire 350 portant à rotation autour de l'axe 330 le galet satellite 300, une toile cylindrique 390 centrée sur l'axe O-O et complémentaire de l'enveloppe du galet satellite 300. La toile cylindrique 390 est prévue à mi-distance de la cage externe 100 et de la cage interne 200. Elle délimite ainsi deux magasins respectivement externe et interne pour les moyens conducteurs 400. La toile 390 réalisée avantageusement en matériau électriquement isolant, venue de moulage avec la bague intermédiaire 350 de préférence, évite ainsi tout contact électrique entre le brin externe 421 et le brin interne 423 des moyens conducteurs 400.

Le guidage à rotation relative de la cage interne 200 sur la cage externe 100 peut être formé par des surfaces de paliers cylindriques complémentaires prévus directement sur celles-ci, telles que les surfaces référencées 104, 106 sur la cage externe 100 et 204, 206 sur la cage interne 200, sur la figure 6.

Cependant, selon une autre variante représentée schématiquement sur les figures 12 et 13, le palier guidant à rotation la cage interne 200 par rapport à la cage externe 100 peut être formé par des corps de roulement composés par les galets satellites 300 eux-mêmes. Plus précisément, les corps de roulement sont alors composés de rouleaux 312 coaxiaux aux axes respectifs 330 des galets 300. Ces rouleaux 312 roulent sur des surfaces cylindriques 108, 208 prévus respectivement sur la cage externe 100 et la cage interne 200.

Dans ce cas, bien entendu le diamètre des rouleaux 312 doit être égal à la distance séparant les surfaces cylindriques 108, 208 précitées.

Il est alors prévu de préférence comme représenté sur la figure 13 différents galets satellites 300 formant corps de roulement. Selon le mode de réalisation particulier représenté sur la figure 13, il est ainsi prévu trois galets satellites équirépartis autour de l'axe O-O. Dans le cas où les galets satellites 300 servent de corps de roulement 312, la demanderesse considère qu'il doit être prévu au moins trois corps de roulement 312 pour assurer un guidage optimum à rotation de la cage interne 200 par rapport à la cage externe 100.

Bien entendu les corps de roulement 312 pourraient être formés de rouleaux indépendants des galets satellites moteur 300, les corps de roulement 312 étant de préférence montés à rotation autour de leur axe sur la bague intermédiaire 350.

Dans le cas où les corps de roulement 312 sont solidaires des galets satellites 300, il suffit que l'un de ceux-ci porte un pignon denté 310 moteur engrenant avec la couronne dentée 110 et la roue dentée 210. En d'autres termes les autres galets satellites pourvus de corps de roulement 312, peuvent être dépourvus de pignon denté 310.

Lorsque le système est pourvu de plusieurs galets satellites 300, la toile 390 précitée doit être scindée en plusieurs secteurs, tels que les secteurs 391, 392 et 393 représentés sur la figure 13, disposés respectivement entre chaque paire de galets satellites adjacents.

Bien entendu la présente invention n'est pas limitée aux modes de réalisation particuliers qui viennent d'être décrits mais s'étend à toutes variantes conformes à son esprit.

Ainsi par exemple, on peut prévoir de rendre indépendant le pignon denté moteur 310 prévu au moins en une unité et le palier cylindrique 320 supportant la boucle en U 422 des moyens conducteurs 400. Dans ce cas, cependant le pignon moteur 310 et le palier cylindrique 320 indépendants doivent être portés à rotation autour de leurs axes respectifs sur une bague intermédiaire commune 350.

A titre d'exemple non limitatif la cage externe 100 peut servir de support à des organes auxiliaires, tels que des commutateurs électriques.

Le système précédemment décrit représenté sur les figures annexées peut servir de roulement entre le tube de colonne de direction d'un véhicule automobile et l'axe de direction.

Les avantages principaux par rapport aux dispositifs de transmission connus formés de systèmes comprenant un empilement à disques et curseurs évoqués dans le préambule de la description sont les suivants :

– continuité électrique garantie, ce qui est essentiel pour la commande de fonction sécurité,

– couple résistant très faible,

– bruit très réduit,

– pas de soudure intermédiaire entre connecteur entrée/sortie,

– résistance ohmique garantie,

– insensibilité aux vibrations,

– pas de graissage à prévoir.

Par rapport aux systèmes connus antérieurement proposés comprenant deux cages susceptibles de rotation relative associées à des moyens conducteurs, le système proposé dans le cadre de la présente invention offre notamment les avantages suivants :

– les moyens conducteurs 400 n'ont pas besoin d'avoir une tenue mécanique apte à leur donner une propriété auto-portante, il suffit que les moyens conducteurs 400 soient suffisamment souples pour s'enrouler et se dérouler au rythme de la rotation relative de la bague externe 100 par rapport à la bague interne 200,

– absence totale de frottement grâce aux galets satellites 300,

– insensibilité aux vibrations et chocs,

– contact électrique continu assuré.

Les galets satellites 300 peuvent être portés en rotation sur la bague intermédiaire 350 par tous moyens classiques appropriés.

Selon le mode de réalisation particulier représenté sur les figures 6 et 12, les galets satellites 300 possèdent un alésage cylindrique central 302 engagé sur un tourillon 356 solidaire de la bague intermédiaire 350 et parallèle à l'axe O-O.

Par ailleurs, en variante, la gorge en creux 372 servant de guide représentée sur la figure 6 pourrait être remplacée par une nervure en spirale en saillie, le doigt 380 étant alors pourvu d'une fourche engagée sur ladite nervure.

Selon une autre variante de la présente invention, la gorge en spirale 372 peut être prévue sur l'une des cages 100 ou 200, le doigt 380 associé étant placé dans la fenêtre 130 ménagée dans l'autre cage 200 ou 100.

Dans le cas où le dispositif ne comprend pas de bague intermédiaire 350, l'index 360 précité peut être prévu sur un galet satellite 300.

## Revendications

1. Dispositif de transmission de signaux entre deux pièces susceptibles de déplacement relatif à rotation, du type comprenant deux cages (100, 200) respectivement externe et interne susceptibles de rotation relative, et des moyens souples (400) conducteurs de signal, placés entre les deux cages ( 100, 200),
   caractérisé par le fait que :
       – la cage externe (100) comprend une couronne dentée (110),
       – la cage interne (200) comprend une roue dentée (210),
       – il est prévu au moins un galet satellite (300) intercalé entre la cage externe (100) et la cage interne (200) et comprenant un pignon denté (310) en prise avec la couronne dentée (110) et la roue dentée (210),
       – il est prévu au moins un galet satellite (300) intercalé entre la cage externe (100) et la cage interne (200) et comprenant un palier cylindrique (320), et
       – lesdits moyens conducteurs (400) forment une boucle en U (422) engagée sur le palier (320) porté par un galet satellite (300).

2. Dispositif selon la revendication 1, caractérisé par le fait qu'il comprend en outre une bague intermédiaire (350), intercalée entre la cage externe (100) et la cage interne (200), libre de rotation par rapport à celles-ci, et qui porte le ou les galet(s) satellite(s) (300) libre(s) de rotation autour de leur axe (330).

3. Dispositif selon l'une des revendications 1 ou 2, caractérisé par le fait qu'il comprend un galet satellite (300) unique.

4. Dispositif selon l'une des revendications 1 ou 2, caractérisé par le fait qu'il comprend plusieurs galets satellites (300) équirépartis autour de l'axe (O-O) du dispositif.

5. Dispositif selon l'une des revendications 1 à 4, caractérisé par le fait que chaque galet satellite (300) comprend un pignon denté (310) en prise avec la couronne dentée (110) et la roue dentée (210), et un palier cylindrique (320), coaxial au pignon denté (310) et solidaire de celui-ci.

6. Dispositif selon les revendications 2 et 4 prises en combinaison, caractérisé par le fait qu'il comprend au moins un galet satellite (300) comportant uniquement un pignon denté (310) et dépourvu de palier cylindrique (320).

7. Dispositif selon les revendications 2 et 4 prises en combinaison ou la revendication 6, caractérisé par le fait qu'il comprend au moins un galet satellite (300) comportant uniquement un palier cylindrique (320) et dépourvu de pignon denté (310).

8. Dispositif selon la revendication 2, caractérisé par le fait qu'il comprend au moins un secteur de voile cylindrique (390) porté par la bague intermédiaire (350).

9. Dispositif selon la revendication 8, caractérisé par le fait que la bague intermédiaire (350) porte un galet satellite (300) unique et un voile cylindrique (390) unique, sensiblement complémentaire du galet (300).

10. Dispositif selon la revendication 8, caractérisé par le fait que la bague intermédiaire (350) porte plusieurs galets satellites (300) équirépartis autour de l'axe du dispositif, et un même nombre de secteurs de voile cylindrique (391, 392, 393) intercalés entre les galets (300).

11. Dispositif selon l'une des revendications 1 à 10, caractérisé par le fait que la cage externe (100) et la cage interne (200) sont guidées à rotation relative, grâce à des surfaces cylindriques complémentaires ( 104, 106 ; 204, 206) prévues directement sur les cages (100, 200).

12. Dispositif selon l'une des revendications 1 à 10, caractérisé par le fait que la cage externe (100) et la cage interne (200) sont guidées à rotation relative grâce à des corps de roulement (312) qui roulent sur des surfaces cylindriques (108, 208) prévues respectivement sur la cage externe (100) et la cage interne (200).

13. Dispositif selon les revendications 2 et 12 prises en combinaison, caractérisé par le fait que les corps de roulement (312) sont portés à rotation par la bague intermédiaire (350).

14. Dispositif selon la revendication 13, caractérisé par le fait que les corps de roulement (312) sont solidaires de galets satellites (300).

15. Dispositif selon l'une des revendications 1 à 14, caractérisé par le fait que les moyens conducteurs (400) sont formés d'un câble souple comprenant plusieurs fils électriquement conducteurs isolés entre eux.

16. Dispositif selon l'une des revendications 1 à 15, caractérisé par le fait que les moyens conducteurs (400) sont formés d'au moins un circuit imprimé souple.

17. Dispositif selon la revendication 16, caractérisé par le fait que le circuit imprimé souple (400) comporte une plage expansée (403, 405) à l'une au moins de ses extrémités, cette plage (403, 405) portant des composants électroniques (406, 407).

18. Dispositif selon l'une des revendications 1 à 14, caractérisé par le fait que les moyens conducteurs (400) comprennent un câble en silicone chargé de particules électriquement conductrices.

19. Dispositif selon l'une des revendications 1 à 14, caractérisé par le fait que les moyens conducteurs (400) comprennent des fibres optiques.

20. Dispositif selon l'une des revendications 1 à 19 prises en combinaison avec la revendication 2, caractérisé par le fait qu'il comprend un index (120) sur la cage externe (100), un index (220) sur la cage interne (200) et un index (360) sur la bague intermédiaire (350), les index (120, 220 et 360) étant alignés dans une position relative connue de la cage externe (100), de la cage interne (200) et de la bague intermédiaire (350).

21. Dispositif selon l'une des revendications 1 à 20, caractérisé par le fait que le nombre des dents de la couronne dentée ( 110) est au moins égal à 3/2 fois le nombre de dents de la roue dentée (210).

22. Dispositif selon l'une des revendications 1 à 21, caractérisé par le fait qu'il comprend un système d'indexage formé d'une part d'un guide en spirale (372) ménagé sur une première pièce (350) et d'autre part d'un doigt d'indexage (380) engagé sur le guide en spirale (372) et placé dans une fenêtre (130) ménagée dans une seconde pièce (100) susceptible de rotation par rapport à la première pièce, de sorte que le doigt d'indexage (380) soit déplacé radialement par rapport à l'axe de rotation (O-O) des pièces lorsque celles-ci sont entraînées à rotation relative.

23. Dispositif selon la revendication 22, caractérisé par le fait que la première et seconde pièces sont formées par les deux cages (100, 200).

24. Dispositif selon la revendication 22, caractérisé par le fait que la première et la seconde pièces sont formées par une cage (100, 200) et par une bague intermédiaire (350) placée entre la cage interne (200) et la cage externe (100).

25. Dispositif selon l'une des revendications 1 à 24 prises en combinaison avec la revendication 2, caractérisé par le fait que la bague intermédiaire (350) est munie d'un guide en spirale (372) sur lequel est engagé un doigt d'indexage (380).

26. Dispositif selon la revendication 25, caractérisé par le fait que le doigt d'indexage (380) est placé dans une fenêtre (130) ménagée dans l'une des cages (100, 200) et conçue pour interdire toute rotation relative entre le doigt d'indexage (380) et cette cage (100).

27. Dispositif selon l'une des revendications 1 à 23, caractérisé par le fait que l'une des cages (100) est munie d'un guide en spirale (372) tandis que l'autre cage (200) est munie d'une fenêtre (130) qui reçoit un doigt d'indexage (380) engagé sur le guide en spirale.

28. Dispositif selon l'une des revendications 26 ou 27, caractérisé par le fait que le doigt (380) est indépendant de ladite cage (100) munie de la fenêtre.

29. Dispositif selon l'une des revendications 26 ou 27, caractérisé par le fait que le doigt (380) est prévu sur une languette souple (381) liée à ladite cage (100) munie de la fenêtre.

30. Dispositif selon la revendication 29, caractérisé par le fait que l'extrémité (382) de la languette (381) portant le doigt d'indexage (380) est liée initialement à ladite cage (100) par une liaison sécable (384).

31. Dispositif selon l'une des revendications 29 ou 30, caractérisé par le fait que la languette (381) est formée sur la cage fixe (100).

32. Dispositif selon l'une des revendications 22 à 31, caractérisé par le fait que le guide en spirale (372) présente une inclinaison accentuée dans sa partie médiane (374).

33. Dispositif selon l'une des revendications 1 à 32, caractérisé par le fait qu'il comprend initialement des liaisons sécables (352, 354) aptes à interdire provisoirement toute rotation relative entre les cages interne et externe (100, 200).

34. Dispositif selon l'une des revendications 1 à 33, caractérisé par le fait qu'il comprend initialement des liaisons sécables entre la cage externe (100) et la cage interne (200).

35. Dispositif selon l'une des revendications 1 à 33, caractérisé par le fait qu'il comprend initialement des liaisons sécables (352) entre la cage externe (100) et la bague intermédiaire (350) d'une part, entre la cage interne (200) et la bague intermédiaire (350) d'autre part.

36. Dispositif selon l'une des revendications 1 à 35, caractérisé par le fait qu'il comprend un index (120) sur la cage externe (100), un index (220) sur la cage interne (200) et un index (360) sur un galet satellite (300).

FIG_1

FIG_2

FIG_3

FIG.4

FIG.5

FIG.6

FIG.8

FIG.10

FIG.7

FIG.9

FIG. 11

FIG. 12

FIG. 13

14

Office européen
des brevets

**RAPPORT DE RECHERCHE EUROPEENNE**

Numero de la demande

EP    91 40 2566

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 001 034 (AITKIN) | 1,3-5, 11,21 | H01R35/02 |
| A | * colonne 3, ligne 25 - ligne 55; figure 3 * | 22 | |
| | --- | | |
| A | GB-A-2 216 476 (FUJI JUKOGYO KABUSHIKI KAISHA) * abrégé; figures 1-3 * | 1,3-5,22 | |
| | --- | | |
| A | PATENT ABSTRACTS OF JAPAN vol. 8, no. 61 (M-284)(1498) 23 Mars 1984 & JP-A-58 211 965 ( MATSUSHITA DENKI SANGYO K.K. ) 9 Décembre 1983 * abrégé * | 25-28 | |
| | --- | | |
| A | US-A-4 540 223 (SCHMERDA ET AL.) | 1,20,22, 36 | |
| | * colonne 3, ligne 25 - ligne 68; figure 3 * | | |
| | --- | | |
| A | US-A-4 789 342 (SHITANOKI) | 1,20,22, 36 | |
| | * abrégé; figure 2 * | | |
| | | | **DOMAINES TECHNIQUES RECHERCHES (Int. Cl.5)** |
| | ----- | | H01R B60R B62D H02G |

Le présent rapport a été établi pour toutes les revendications

| Lieu de la recherche | Date d'achèvement de la recherche | Examinateur |
|---|---|---|
| LA HAYE | 18 DECEMBRE 1991 | KOHLER J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)